# EUROPÄISCHE PATENTSCHRIFT

(11) **EP 3 118 987 B1**
(45) Veröffentlichungstag und Bekanntmachung des Hinweises auf die Patenterteilung: **28.08.2019**
(21) Anmeldenummer: 16175547.5
(22) Anmeldetag: 21.06.2016
(51) Int. Cl.: H02P 6/17, H02P 6/16

(54) **VERFAHREN ZUM BETRIEB EINER ELEKTRISCHEN MASCHINE UND ELEKTRISCHE MASCHINE**
ELECTRICAL MACHINE AND METHOD FOR OPERATING AN ELECTRICAL MACHINE
PROCÈDE DE FONCTIONNEMENT D'UNE MACHINE ÉLECTRIQUE ET MACHINE ÉLECTRIQUE

(30) Priorität: 13.07.2015 DE 102015213083
(43) Veröffentlichungstag der Anmeldung: 18.01.2017
(73) Patentinhaber: Baumüller Nürnberg GmbH, 90482 Nürnberg (DE)
(72) Erfinder: Lelkes, András, 90491 Nürnberg (DE)
(74) Vertreter: FDST Patentanwälte

(56) Entgegenhaltungen:
- DE-A1-102006 046 283
- DE-A1-102011 009 932

## Beschreibung

Die Erfindung betrifft sowohl ein Verfahren zum Betrieb einer elektrischen Maschine als auch eine elektrische Maschine. Die elektrische Maschine weist einen Stator und einen Läufer auf. Unter elektrischer Maschine wird ein Generator, jedoch insbesondere ein Elektromotor verstanden. Die elektrische Maschine ist bevorzugt bürstenlos.

Industrieanlagen weisen üblicherweise eine Vielzahl an rotierenden elektrischen Maschinen auf, mittels derer beispielsweise Werkzeuge oder Förderbänder angetrieben werden. Die hierfür benötigte elektrische Energie wird mittels Umrichtern bereitgestellt, die signaltechnisch mit einer Prozesssteuerung gekoppelt sind. Mittels der Prozesssteuerung wird eine Soll-Drehzahl vorgegeben, auf die die jeweilige elektrische Maschine mittels des zugeordneten Umrichters geregelt wird. Der Umrichter ist elektrisch mit einem Versorgernetzwerk gekoppelt und weist einen Halbleiterschalter auf, der in Reihe zwischen dem Versorgernetzwerk und der elektrischen Maschine geschaltet ist. Die Ansteuerung des Halbleiterschalters erfolgt derart, dass die Drehzahl der elektrischen Maschine der von der Prozesssteuerung vorgegebenen Soll-Drehzahl entspricht. Die mittels des Halbleiterschalters geschalteten elektrischen Spannungen betragen üblicherweise über 800 Volt. Die geschalteten elektrischen Ströme weisen eine Stromstärke oberhalb von 1 A oder 10 A auf.

Um eine Verletzung von Bedienpersonal der elektrischen Maschine auszuschließen oder derartige Folgen zu vermindern, sind sogenannte "ot-Aus"-Schalter bekannt. Bei einer unbefugten oder ungewollten Annäherung einer Person an die elektrische Maschine wird dieser Schalter manuell betätigt, um einen Betrieb der elektrischen Maschine im Wesentlichen unverzüglich zu beenden. Hierfür ist der Schalter meist signaltechnisch mit der Prozesssteuerung gekoppelt. Mittels der Prozesssteuerung wird bei Betätigung des Schalters ein Signal an das Regelteil übermittelt, und infolgedessen wird die Bestromung der elektrischen Maschine unterbunden. Hierfür wird der Leistungshalbleiterschalter meist in einen elektrisch nicht leitenden Zustand versetzt.

Soll jedoch die elektrische Maschine oder aber das mittels der elektrischen Maschine angetriebene Werkzeug eingestellt oder kalibriert werden, ist eine derartige Sicherheitsfunktion nicht geeignet, da auf diese Weise nicht der vollständige mittels des Werkzeugs abgefahrene Bereich kontrolliert werden kann. Daher ist es üblich, die elektrische Maschine mit einer begrenzten Drehzahl zu betreiben, bei der eine Verletzung einer das Werkzeug bzw. die elektrische Maschine einstellenden Person ausgeschlossen ist. Hierfür wird üblicherweise die tatsächliche Drehzahl der elektrischen Maschine mittels eines sogenannten sicheren Gebers erfasst, und bei einem ungewollten Überschreiten der begrenzten Drehzahl wird der Umrichter stromlos geschaltet. Mittels des sicheren Gebers ist sichergestellt, dass die tatsächliche Drehzahl der elektrischen Maschine fehlerfrei, zumindest jedoch mit lediglich einem vergleichsweise geringen Fehler auch unter widrigen Umständen erfasst wird.

Ein sicherer Geber ist vergleichsweise kostenintensiv. Auch weist ein derartiger sicherer Geber, insbesondere dessen Überwachungselektronik, bei Betrieb einen vergleichsweise hohen Energiebedarf auf. Zudem ist es dennoch möglich, wenn auch unwahrscheinlich, dass die Drehzahl der elektrischen Maschine nicht korrekt ermittelt, oder aber nicht korrekt mittels der Überwachungselektronik ausgewertet wird, was zu einer sogenannten eingefrorenen Lageinformation führt. In diesem Fall wird ein Überschreiten der begrenzten Drehzahl nicht oder zumindest nicht rechtzeitig erkannt, sodass dennoch eine Verletzung von Personen erfolgen kann.

Aus DE 10 2006 046283 A1 ist ein Überwachungsverfahren für eine Antriebseinrichtung bekannt. Hierbei wird ein Gebersignal eines ersten Gebers mit einem Gebersignal eines zweiten Gebers verglichen. Es wird eine Abweichung der beiden Gebersignale erstellt. Falls die Abweichung einen Stellwert überschreitet, wird ein Fehlersignal ausgelöst.

In DE 10 2011 009 932 A1 ist ein Verfahren offenbart, bei dem zwei Drehzahlwerte erstellt werden, die miteinander verglichen werden. Bei Überschreiten eines kritischen Differenzbetrags wird eine sichere Funktion ausgeführt.

Der Erfindung liegt die Aufgabe zugrunde, ein besonders geeignetes Verfahren zum Betrieb einer elektrischen Maschine und eine besonders geeignete elektrische Maschine anzugeben, wobei zweckmäßigerweise eine Sicherheit erhöht und vorzugsweise Kosten gesenkt sind.

Diese Aufgabe wird durch die Merkmale der unabhängigen Ansprüche erfindungsgemäß gelöst. Vorteilhafte Weiterbildungen und Ausgestaltungen sind Gegenstand der jeweiligen Unteransprüche.

Das Verfahren dient dem Betrieb einer elektrischen Maschine. Die elektrische Maschine ist beispielsweise ein Generator, besonders bevorzugt jedoch ein Elektromotor, der beispielsweise innerhalb einer Anlage Verwendung findet. Beispielsweise ist der Elektromotor ein Bestandteil einer Industrieanlage. Zweckmäßigerweise ist der Elektromotor ein Bestandteil eines Antriebs eines Extruders, einer Spritzgießmaschine, einer Druckmaschine, eines Rundtischs, einer Presse, eines Wicklers, einer Drahtziehmaschine, einer Holzbearbeitungsmaschine oder einer Werkzeugmaschine. Der Elektromotor weist zweckmäßigerweise eine Leistung zwischen 3 kW und 200 kW, beispielsweise zwischen 3 kW und 60 kW, zwischen 5 kW und 135 kW oder zwischen 20 kW und 175 kW auf. Zweckmäßigerweise ist die elektrische Maschine wassergekühlt.

Der Elektromotor ist beispielsweise ein Asynchronmotor, bevorzugt jedoch ein Synchronmotor, wie z.B. ein Synchron-Reluktanzmotor, oder ein permanenterregter Synchronmotor. In einer weiteren Alternative ist der Elektromotor ein fremderregter Synchronmotor, der vorzugsweise vergleichsweise ausgeprägte Pole aufweist. Beispielsweise ist der Elektromotor ein bürstenloser Gleichstrommotor (BLDC) oder besonders bevorzugt ein Servomotor.

Die elektrische Maschine umfasst einen Läufer, der bevorzugt eine Anzahl an Permanentmagneten aufweist, die beispielsweise umfangsseitig eines Blechpakets des Läufers angebunden oder aber innerhalb von Taschen des Blechpakets angeordnet sind. Bei Betrieb wird der Läufer bezüglich eines Stators bewegt. Hierbei wird beispielsweise der Läufer transversal verbracht. Sofern die elektrische Maschine ein Elektromotor ist, ist folglich ein Linearmotor bereitgestellt. In einer Alternative hierzu wird der Läufer bezüglich des Stators rotiert. Die elektrische Maschine ist somit eine rotierende elektrische Maschine, und der Läufer bildet einen Rotor. Der Rotor ist um eine Rotationsachse drehbar gelagert ist. Insbesondere umfasst der Rotor eine Rotorwelle, die konzentrisch zur Rotationsachse angeordnet ist. Zweckmäßigerweise ist die Rotorwelle rotationssymmetrisch bezüglich der Rotationsachse. Vorzugsweise ist bei Betrieb die Drehzahl der elektrischen Maschine zwischen 150 U/min und 1500 U/min, geeigneterweise zwischen 150 U/min und 450 U/min oder aber zwischen 350 U/min und 1.500 U/min. Beispielsweise ist das maximale Drehmoment der elektrischen Maschine zwischen 300 Nm und 1.000 Nm, insbesondere zwischen 220 Nm und 1.200 Nm, zwischen 800 Nm und 5.000 Nm oder zwischen 2.400 Nm und 10.000 Nm.

Der Stator der elektrischen Maschine weist bevorzugt eine Anzahl an elektrischen Spulen auf, die mit einer Elektronik elektrisch kontaktiert sind. Zum Beispiel sind die elektrischen Spulen in einer Stern- oder Dreiecksschaltung miteinander elektrisch kontaktiert. Geeigneterweise weist die elektrische Maschine zwei oder drei elektrische Phasen auf, die zueinander um insbesondere 120° versetzt sind. Die elektrische Maschine ist insbesondere mit einem Umrichter elektrisch kontaktiert. Der Umrichter weist vorzugsweise einen Halbleiterschalter, beispielsweise vier oder sechs Halbleiterschalter auf, die zweckmäßigerweise in einer Brückenschaltung miteinander verschaltet sind. Zum Beispiel weist der Umrichter eine B4- oder B6-Schaltung auf. Die Brückenschaltung ist zweckmäßigerweise mittels einer Anzahl an Leistungshalbleiterschaltern realisiert, beispielsweise MOSFET's oder GTO's. Vorzugsweise umfasst der Umrichter einen Zwischenkreis der gegen die Brückenschaltung geführt ist. Insbesondere umfasst der Umrichter eine Gleichrichterseite, die mit einem Versorgungsnetz gekoppelt ist, die beispielsweise einen Drehstrom mit einer Frequenz von 50 Hz oder 60 Hz aufweist.

Die elektrische Maschine umfasst ferner einen ersten Sensor und eine zweiten Sensor. Der erste Sensor ist vorgesehen und eingerichtet, eine Position des Läufers bezüglich des Stators zu erfassen. In einer Alternative hierzu ist der erste Sensor vorgesehen und eingerichtet, eine Änderung der Position des Läufers bezüglich des Stators zu erfassen. Mit anderen Worten wird mittels des ersten Sensors die Geschwindigkeit des Läufers bezüglich des Stators erfasst. Insbesondere ist der erste Sensor hierfür geeignet. Der zweite Sensor ist vorgesehen und eingerichtet, eine Beschleunigung des Läufers bezüglich des Stators zu erfassen. Vorzugsweise ist der zweite Sensor hierfür geeignet. Mittels der beiden Sensoren ist hierbei zweckmäßigerweise jeweils sowohl ein negativer Wert als auch ein positiver Wert als Signal erfassbar, also beispielsweise eine negative Beschleunigung, was insbesondere einer Abbremsung des Läufers entspricht.

Unter Erfassen wird insbesondere verstanden, dass die jeweilige Größe gemessen, zweckmäßigerweise direkt gemessen, also direkt beobachtet wird. Vorzugsweise wird mittels des ersten Sensors und des zweiten Sensors ein unterschiedlicher physikalischer Effekt erfasst. Beispielswiese wird mittels des ersten Sensors eine optische Markierung des Läufers erfasst, vorzugsweise mittels eines optischen Sensors. Beispielsweise ist der erste Sensor ein Resolver, Encoder, Inkrementalgeber oder Tachogenerator. Zweckmäßigerweise wird mittels des ersten Sensors eine Sinus-Spur und eine Cosinus-Spur erfasst.

Dahingegen wird mittels des zweiten Sensors beispielsweise ein elektrisches oder magnetisches Feld erfasst, das mittels des Läufers beispielsweise verändert wird. Zweckmäßigerweise wird hierfür eine elektrische Spule oder ein Hall-Sensor verwendet. Vorzugsweise wird als zweiter Sensor ein Ferraris-Sensor verwendet, zumindest jedoch umfasst der zweite Sensor einen Ferraris-Sensor.

Das Verfahren sieht vor, dass in einem ersten Arbeitsschritt mittels des ersten Sensors ein erstes Sensorsignal erfasst wird. Mit anderen Worten wird die Position bzw. die Änderung der Position des Läufers bezüglich des Stators erfasst. In einem zweiten Arbeitsschritt, der zeitlich vor, zeitlich nach oder besonders bevorzugt gleichzeitig zu dem ersten Arbeitsschritt erfolgt, wird mittels des zweiten Sensors ein zweites Sensorsignal erfasst. Insbesondere entspricht das zweite Sensorsignal der ersten oder zweiten zeitlichen Ableitung des ersten Sensorsignals. Folglich wird die Beschleunigung des Läufers bezüglich des Stators zu erfasst.

Anhand des ersten Sensorsignals und des zweiten Sensorsignals wird eine Geschwindigkeit bestimmt. Dies erfolgt zweckmäßigerweise mittels eines Beobachters. Insbesondere werden hierfür das erste und das zweite Sensorsignal dem Beobachter zugeführt.

Beispielsweise wird zur Erstellung der Geschwindigkeit zunächst eine zeitliche Ableitung des ersten Sensorsignals erstellt, insbesondere sofern der erste Sensor der Erfassung einer Änderung einer Position des Läufers bezüglich des Stators dient, also der Erfassung der Geschwindigkeit des Läufers. Sofern mittels des ersten Sensors die Position des Läufers bezüglich des Stators ermittelt wird, wird zweckmäßigerweise die zweite zeitliche Ableitung des ersten Sensorsignals erstellt. Mit anderen Worten wird das erste Sensorsignal auf die gleiche physikalische Größe transformiert, die mittels des zweiten Sensors erfasst wird, und die folglich das zweite Sensorsignal aufweist, also die Beschleunigung des Läufers bezüglich des Stators. Mittels des auf diese Weise erstellten Werts und dem zweiten Sensorsignal wird eine gewichtete Summe gebildet, wobei zweckmäßigerweise die Summe der Gewichte gleich Eins (1) ist. Die Gewichte sind vorzugsweise größer Null (0) und werden geeignet ermittelt, beispielsweise in Abhängigkeit der jeweiligen verwendeten elektrischen Maschine, zum Beispiel direkt nach der Montage auf einem Prüfstand. Geeigneterweise sind die verwendeten Gewichte abhängig von der Geschwindigkeit des Läufers. Sofern als Gewicht jeweils 0,5 verwendet wird, wird somit der Durchschnitt der mittels des ersten Sensors ermittelten Beschleunigung und mittels des zweiten Sensors erfasste Beschleunigung des Läufers ermittelt.

Hieran anschließend wird zweckmäßigerweise das zeitliche Integral über diesen Wert erstellt. Beispielsweise wird zu diesem Wert als Offset eine zuvor ermittelte Geschwindigkeit herangezogen, sofern das Verfahren bereits über einen längeren Zeitraum ausgeführt wurde, oder vor Ausführung des Verfahrens wird in einem Arbeitsschritt, der zeitlich vor dem ersten Arbeitsschritt des Verfahrens erfolgt, mittels des ersten Sensors die Geschwindigkeit des Läufers bestimmt. Sofern die elektrische Maschine eine rotierende elektrische Maschine ist, entspricht die Geschwindigkeit der Drehzahl des Rotors.

Die Geschwindigkeit wird einer Geschwindigkeitsregelung zugeführt, beispielsweise einem P-Regler oder einem I-Regler, zweckmäßigerweise ein PI-Regler und von diesem als Ist-Drehzahl herangezogen. Bei einer nachfolgenden Regelschleife wird diese Geschwindigkeit mit einer vorgegebenen Soll-Geschwindigkeit verglichen und folglich der Läufer beschleunigt oder abgebremst, was beispielsweise mittels geeigneter Ansteuerung des Umrichters oder einer Bremse erfolgt, sofern diese vorhanden sind. Die ermittelte Geschwindigkeit wird ferner einer Sicherheitsüberwachung zugeleitet, mittels derer die Sicherheit der elektrischen Maschine überwacht wird.

Die Sicherheitsüberwachung ist vorgesehen und eingerichtet, eine erste sichere Funktion auszuführen, sofern dies erforderlich ist. Mittels der sicheren Funktion wird überwacht, dass der Läufer bezüglich des Stators stets in einer Position verbleibt, bei der eine Verletzung einer Person oder eine Beschädigung eines Bauteils im Wesentlichen ausgeschlossen ist. Folglich ist für die Sicherheitsüberwachung kein sicherer Geber erforderlich, bei dem eine vergleichsweise mechanisch sichere Befestigung an dem Läufer erfolgen muss, was zu erhöhten Herstellungskosten führt. Auch ist ein Strombedarf bei Betrieb reduziert.

Die erste sichere Funktion ist beispielsweise sicher abgeschaltetes Moment ("Save Torque Off"; STO), sicherer Betriebshalt ("Save Operating Stop"; SOS), sicherer Stop 1/2 ("Save Stop 1/2"; SS1/SS2), sicher begrenzte Geschwindigkeit ("Savely Limited Speed"; SLS), sichere Geschwindigkeitsüberwachung ("Save Speed Monitor"; SSM), sichere Bewegungsrichtung ("Save Direction"; SDI), sichere begrenzte Position ("Savely Limited Position"; SLP) oder sichere Position ("Save Position"; SP). Besonders bevorzugt wird mittels der Sicherheitsüberwachung die Geschwindigkeit mit einem ersten Grenzwert verglichen. Hierbei wird zweckmäßigerweise der Läufer abgebremst, sofern die Geschwindigkeit den ersten Grenzwert überschreitet. Beispielsweise sofern der Absolutwert der Geschwindigkeit größer als der erste Grenzwert ist. Zweckmäßigerweise ist die erste Funktion sichere begrenzte Geschwindigkeit, und folglich wird als erster Grenzwert die Geschwindigkeit herangezogen, die bei Ausführung der ersten sicheren Funktion nicht überschritten werden soll. Sofern der erste Grenzwert überschritten wird, wird beispielsweise sicher abgeschaltetes Moment ausgeführt. Zweckmäßigerweise umfasst die Sicherheitsüberwachung eine Anzahl erster sicherer Funktionen. Auf diese Weise ist die Sicherheit der elektrischen Maschine weiter erhöht.

Vorzugsweise erfolgt eine Überwachung der Sensorsignale mittels einer Diagnosefunktion. Hierbei wird überwacht, ob ein Fehler eines der beiden Sensoren vorliegt, beispielsweise ob ein Defekt vorliegt, eine Signalleitung beschädigt ist oder eine Befestigung an dem Stator oder dem Läufer gelöst ist. Insbesondere wird hierfür eine Abweichung ermittelt, wofür zumindest eines der Sensorsignale herangezogen wird. Die Abweichung ist in diesem Fall insbesondere ein Maß für die Güte der Sensorsignale. Sofern die Abweichung größer als ein zweiter Grenzwert ist, wird eine zweite sichere Funktion ausgeführt. Insbesondere wird eine der oben genannten ersten sicheren Funktionen als zweite sichere Funktion ausgeführt. Besonders bevorzugt ist die zweite sichere Funktion sicher abgeschaltetes Moment (STO), sicherer Stop 1 (SS1) oder sicherer Stop 2 (SS2). Sofern folglich eine Güte der Sensorsignale vergleichsweise niedrig ist, wird die elektrische Maschine mittels der Sicherheitsüberwachung stillgesetzt, also eine Bewegung des Läufers bezüglich des Stators verhindert. Beispielsweise erfolgt dies gesteuert, so dass die elektrische Maschine gesteuert stillgesetzt wird. Sobald folglich die Zuverlässigkeit der Geschwindigkeitsermittlung mittels der beiden Sensorsignale nicht mehr gegeben ist, wird die elektrische Maschine mittels der Sicherheitsüberwachung in einen sicheren Zustand überführt, weswegen eine Verletzung von Personen oder eine Beschädigung von Bauteilen im Wesentlichen ausgeschlossen werden kann. Dies erfolgt zweckmäßigerweise unabhängig von der aktuellen Position/Geschwindigkeit/Beschleunigung des Läufers bezüglich des Stators, da diese nicht korrekt ermittelt werden können. Vorzugsweise wird eine Fehlermeldung ausgegeben, beispielsweise mittels einer Anzeigevorrichtung, oder die Fehlermeldung wird an eine Prozesssteuerung geleitet. Zweckmäßigerweise verbleibt der Läufer in einer Stillstandsposition, sobald die zweite sichere Funktion ausgeführt wird, bis eine Reparatur, Wartung oder Inspektion der elektrischen Maschine erfolgte. Auf diese Weise ist eine Sicherheit weiter erhöht.

Beispielsweise wird das zweite Sensorsignal zeitlich integriert. Das auf diese Weise erhaltene Integral und das erste Sensorsignal werden zur Erstellung der Abweichung herangezogen. Beispielsweise wird das zweite Sensorsignal zweimal zeitlich integriert, falls mittels des ersten Sensors die Position des Läufers bezüglich des Stators erfasst wird. Vorzugsweise wird das zweite Sensorsignal auf die gleiche physikalische Größe transformiert wie das erste Sensorsignal. Insbesondere wird zur Ermittlung der Abweichung das Integral, das beispielsweise mittels einfacher oder zweifacher Integration des zweiten Sensorsignals erstellt wird, von dem ersten Sensorsignal abgezogen, also die Differenz zwischen dem Integral und dem ersten Sensorsignal erstellt. Zweckmäßigerweise wird lediglich der Absolutwert hiervon als Abweichung herangezogen.

In einer Alternative hierzu wird die zeitliche Ableitung des ersten Sensorsignals erstellt, und die Abweichung wird zwischen der Ableitung dem zweiten Sensorsignal ermittelt. Sofern mittels des ersten Sensors die Position des Läufers bezüglich des Stators erfasst wird, wird zweckmäßigerweise zur Erstellung der zeitlichen Ableitung das erste Sensorsignal zweimal differenziert. Mit anderen Worten wird das erste Sensorsignal auf die gleiche physikalische Größe transformiert, wie das zweite Sensorsignal, und zwischen diesen wird die Abweichung ermittelt. Die Abweichung wird beispielsweise mittels Differenzbildung erstellt, wobei zweckmäßigerweise lediglich der Absolutwert hiervon herangezogen wird. In einer weiteren Alternative hierzu wird, falls mittels des ersten Sensors die Position des Läufers bezüglich des Stators erfasst wird, das erste Sensorsignal einfach zeitlich differenziert, und das zweite Sensorsignal wird zeitlich einfach integriert. Die auf diese Weise ermittelten Werte werden zur Ermittlung der Abweichung verwendet. Folglich wird stets die gleiche physikalische Größe zweimal ermittelt, nämlich einmal mittels des ersten Sensorsignals und einmal mittels des zweiten Sensorsignals. Bei einem korrekten Betrieb der elektrischen Maschine sind die beiden auf diese Weise erstellten Werte mit Ausnahme von Messtoleranzen im Wesentlichen gleich. Sofern die Abweichung jedoch größer als der zweite Grenzwert ist, der insbesondere auf die Messungenauigkeiten und Fehlertoleranzen der beiden Sensoren eingestellt ist, liegt eine Fehlfunktion zumindest einen der beiden Sensoren vor.

Alternativ wird ein elektrischer Stromfluss oder eine elektrische Spannung erfasst. Die elektrische Spannung liegt zweckmäßigerweise an einer der elektrischen Spulen des Stators an. Der elektrische Stromfluss bezeichnet insbesondere den elektrischen Stromfluss durch eine der elektrischen Spulen des Stators. Zweckmäßigerweise wird mittels der erfassten elektrischen Spannung bzw. des erfassten elektrischen Stromflusses ein Raumzeiger erstellt, also eine vektorielle Beschreibung des elektrischen Stromflusses bzw. der elektrischen Spannung. Zweckmäßigerweise wird sowohl der elektrische Stromfluss als auch die elektrische Spannung erfasst. Mittels eines theoretischen, physikalischen Modells wird anhand der erfassten elektrischen Spannung bzw. des erfassten elektrischen Stromflusses ein drittes Sensorsignal ermittelt. Insbesondere wird mittels des theoretischen Modells eine Geschwindigkeit des Läufers bezüglich des Stators berechnet und als drittes Sensorsignal herangezogen.

Hierbei wird mittels des dritten Sensorsignals und des ersten Sensorsignal oder mittels des dritten Sensorsignals und des zweiten Sensorsignal die Abweichung erstellt. Insbesondere wird das erste Sensorsignal bzw. das zweite Sensorsignal auf die gleiche physikalische Größe wie das dritte Sensorsignal transformiert, insbesondere folglich ein zeitliches Integral bzw. eine zeitliche Ableitung erstellt, oder das dritte Sensorsignal wird mittels Integration oder Ableiten auf die gleiche physikalische Größe wie das erste bzw. zweite Sensorsignal transformiert. Beispielsweise wird die Abweichung sowohl zwischen dem dritten Sensorsignal und dem ersten Sensorsignal sowie zwischen dem dritten Sensorsignal und dem zweiten Sensorsignal erstellt. Sofern lediglich eine der auf diese Weise erstellten Abweichungen größer als der zweite Grenzwert ist, ist ein Fehler identifiziert. Es ist zudem auch eine Zuordnung des erfassten Fehlers zu einem der beiden Sensoren ermöglicht, nämlich zu dem Sensor, dessen Sensorsignal zu einer Abweichung führt, die den zweiten Grenzwert übersteigt. Zusammenfassend werden zur Ermittlung der Abweichung weitere Messwerte herangezogen, die, sofern die elektrische Maschine ein mittels eines Umrichters bestromter Elektromotor ist, vorliegen, oder jedoch vergleichsweise einfache ermittelbar sind. Insbesondere wird hierbei ein Fluss der elektrischen Maschine ermittelt, und anhand dessen das dritte Sensorsignal erstellt.

Beispielsweise werden zur Ermittlung der Abweichung die jeweiligen Werte direkt voneinander abgezogen. Besonders bevorzugt wird der Absolutwert der Differenz als Abweichung verwendet. In einer Alternative hierzu wird die Differenz gewichtet. Mit anderen Worten wird jeder der beiden zur Differenzbildung herangezogenen Werte, also insbesondere ein berechneter Wert und das erste bzw. zweite Sensorsignal, mit einem Gewichtungsfaktor multipliziert und erst im Anschluss hieran die Differenz gebildet. Folglich wird das Integral- und/oder das erste Sensorsignal jeweils mit einem Gewichtungsfaktor multipliziert und hieraus die Differenz erstellt. In einer Alternative hierzu werden die Ableitung, das zweite Sensorsignal und/oder das dritte Sensorsignal mit einem Gewichtungsfaktor multipliziert, sofern diese zur Bildung zur Abweichung herangezogen werden. Die auf diese Weise gewichteten Werte werden zur Differenzbildung heranzogen. Zweckmäßigerweise wird ebenfalls lediglich der Absolutwert der gewichteten Differenz als Abweichung herangezogen. Auf diese Weise ist es ermöglicht, vergleichsweise hochfrequente Fluktuationen des jeweiligen Sensorsignals vergleichsweise gering zu berücksichtigen. Auch ist eine Abstimmung auf die jeweiligen zur Erstellung der Sensorsignale verwendeten physikalischen Prinzipien möglich. Somit ist ein fehlerhaftes Erkennen von Abweichungen ausgeschlossen, die lediglich aufgrund der verwendeten Sensoren und nicht anhand der tatsächlichen Bewegung des Läufers bezüglich des Stators bedingt sind, weswegen ein vergleichsweise geringer zweiter Grenzwert herangezogen werden kann. Auf diese Weise ist bereits frühzeitig mit einer vergleichsweisen hohen Genauigkeit ein Fehlverhalten eines der Sensoren ermittelbar. Folglich ist eine Sicherheit der elektrischen Maschine erhöht.

Zweckmäßigerweise wird das zweite Sensorsignal um einen Offset korrigiert. Mit anderen Worten wird zu dem zweiten Sensorsignal der Offset hinzuaddiert, wobei der Offset beispielsweise positiv oder negativ ist. Insbesondere ist der Offset zeitlich veränderlich, insbesondere abhängig von der Zeit, für die der zweite Sensor aktiv ist. Mit anderen Worten wird mittels des Offsets die Betriebsdauer des zweiten Sensors berücksichtigt, also die Zeitspanne, innerhalb derer die zweiten Sensorsignale erfasst werden. Auf diese Weise werden Sättigungseffekte oder dergleichen berücksichtigt, die anderweitig zu einem Drift des zweiten Sensorsignals führen würden.

Beispielsweise wird zur Erstellung des zeitlichen Offsets die zeitliche Ableitung des ersten Sensorsignals bzw. die zweite zeitliche Ableitung des ersten Sensorsignals erstellt, so dass dieses auf die gleiche physikalische Größe transformiert ist, wie das zweite Sensorsignal. In einem weiteren Arbeitsschritt wird der zeitliche Mittelwert dieser Ableitung gebildet. Mit anderen Worten wird die Ableitung zeitlich gemittelt, wobei das zeitliche Fenster beispielsweise mit Beginn der Datenerfassung mittels des ersten oder zweiten Sensors beginnt und mit dem letzten erfassten ersten und/oder zweiten Sensorsignal endet. In einer Alternative hierzu ist das zeitliche Fenster konstant und umfasst beispielsweise die letzten zehn erfassten ersten Sensorsignale. Ferner wird der zeitliche Mittelwert der zweiten Sensorsignale ermittelt, wobei das zeitliche Fenster zweckmäßigerweise gleich dem zeitlichen Fenster zur Ermittlung des Mittelwerts der Ableitung entspricht. In einem weiteren Arbeitsschritt wird das zweite Sensorelement derart angepasst, dass die beiden Mittelwerte gleich sind. Hierfür wird zweckmäßigerweise die Differenz zwischen diesen gebildet und der auf diese Weise erhaltene Wert als Offset herangezogen. Sofern das zeitliche Fenster, das zur Mittelwertbildung herangezogen wird, zeitlich veränderlich ist, ist folglich auch der Offset zeitlich verändert, und das zweite Sensorsignal ist somit angepasst. Insbesondere wird lediglich das mittels des zeitlichen Offsets angepasste zweite Sensorsignal zur Ermittlung der Abweichung herangezogen. Alternativ oder in Kombination hierzu wird das mit dem Offset korrigierte zweite Sensorsignal zur Bestimmung der Geschwindigkeit verwendet.

In einer weiteren Ausführungsform wird die Geschwindigkeit mehrkanalig bestimmt. Insbesondere umfasst der Beobachter zwei oder mehr Kanäle, die der Bestimmung der Geschwindigkeit dienen. Beispielsweise wird das erste und das zweite Sensorsignal sowohl analog verarbeitet und somit die Geschwindigkeit analog bestimmt, als auch das erste und das zweite Sensorsignal digital verarbeitet und folglich ein digitaler Wert für die Geschwindigkeit bestimmt. Alternativ oder in Kombination hierzu wird die Geschwindigkeit in einem der Kanäle mittels Software bestimmt. In einer weiteren Alternative hierzu ist einer der Kanäle mittels einer Hardware realisiert. Beispielsweise wird zur Bestimmung der Geschwindigkeit ein Microcontroller, ein digitaler Signalprozessor (DSP), IPC, SPS, ASIC oder FGPA verwendet. In einer Alternative hierzu werden die Kanäle des Beobachters mittels unterschiedlicher Programmiersprachen konfiguriert oder realisiert. Sofern das dritte Sensorsignal herangezogen wird, werden beispielsweise unterschiedliche theoretische Modelle verwendet. In einem weiteren Schritt werden die einzelnen ermittelten Geschwindigkeiten miteinander verglichen. Sofern die Abweichung zwischen diesen Geschwindigkeiten größer als ein dritter Grenzwert ist, wird zweckmäßigerweise eine dritte sichere Funktion ausgeführt, insbesondere sicher abgeschaltetes Moment (STO). Auf diese Weise ist eine Sicherheit weiter erhöht.

Die elektrische Maschine umfasst einen Stator und einen Läufer. Ferner weist die elektrische Maschine einen ersten Sensor zur Erfassung einer Position oder einer Änderung einer Position, also einer Geschwindigkeit, des Läufers bezüglich des Stators, als auch einen zweiten Sensor zur Erfassung einer Beschleunigung des Läufers bezüglich des Stators auf. Die elektrische Maschine weist zudem eine Sicherheitsüberwachung und eine Geschwindigkeitsregelung auf. In einem ersten Arbeitsschritt wird bei Betrieb der elektrischen Maschine mittels des ersten Sensors ein erstes Sensorsignal und mittels des zweiten Sensors ein zweites Sensorsignal erfasst. Anhand des ersten und zweiten Sensorsignals wird eine Geschwindigkeit bestimmt. Die Geschwindigkeit wird sowohl der Geschwindigkeitsregelung als auch der Sicherheitsüberwachung zur Ausführung einer ersten sicheren Funktion zugeleitet. Mittels der Geschwindigkeitsregelung wird die elektrische Maschine derart angesteuert oder besonders bevorzugt geregelt, dass diese eine vorgegebene Soll-Geschwindigkeit einnimmt. Insbesondere umfasst die elektrische Maschine eine Steuereinheit, mittels derer dieses Verfahren durchgeführt wird. Die Steuereinheit ist vorgesehen und eingerichtet, zweckmäßigerweise geeignet, dieses Verfahren durchzuführen.

Der Läufer wird bei Betrieb beispielsweise linear bezüglich des Stators verbracht. Besonders bevorzugt jedoch ist die elektrische Maschine eine rotierende Maschine, und der Läufer wird bezüglich des Stators um eine Rotationsachse rotiert. Insbesondere ist die elektrische Maschine als Innenläufer oder als Außenläufer ausgestaltet. Zweckmäßigerweise ist die elektrische Maschine bürstenlos und vorzugsweise elektrisch mit einem Umrichter kontaktiert, insbesondere der Stator.

Beispielsweise ist die elektrische Maschine ein Generator. Besonders bevorzugt ist die elektrische Maschine ein Elektromotor, beispielsweise ein permanenterregter Synchronmotor. Der Elektromotor weist beispielsweise eine Leistung zwischen 3 kW und 200 kW und insbesondere ein Drehmoment zwischen 220 Nm und 10.000 Nm auf.

Vorzugsweise unterscheidet sich das Messprinzip des ersten Sensors von dem Messprinzip des zweiten Sensors. Beispielsweise basiert der erste Sensor auf einem optischen Prinzip, wohingegen der zweite Sensor mittels eines HallSensors oder eines eine elektrische Spule aufweisenden Sensors realisiert ist. Folglich ist eine Beeinflussung des zweiten Sensors aufgrund der Messung mittels des ersten Sensors im Wesentlichen ausgeschlossen. Auch ist ein Betrieb möglich, falls aufgrund von Umgebungsgrößen ein Betrieb eines der beiden Sensoren eingeschränkt sein sollte, beispielsweise aufgrund eines externen elektrischen oder magnetischen Feldes. In diesem Fall ist eine Erfassung mittels eines optischen Sensors auch weiterhin möglich.

Alternativ oder besonders bevorzugt in Kombination hierzu wird als zweiter Sensor ein Ferraris-Sensor herangezogen. Hierbei ist an dem Läufer bevorzugt ein nicht magnetisches, elektrisch leitfähiges Bauteil angebunden, beispielsweise eine Aluminium- oder Kupferscheibe oder Platte. In einer Alternative hierzu ist die Scheibe bzw. Platte an dem Stator angebunden. Bei Betrieb werden relativ hierzu ein Permanentmagnet und eine elektrische Spule bewegt. Der Permanentmagnet und die Spule sind entweder an dem Stator oder aber an dem Läufer angebunden. Aufgrund des bewegten Permanentmagneten werden Wirbelströme innerhalb der Scheibe bzw. der Platte induziert, die wiederum ein Magnetfeld hervorrufen, welches mittels der elektrischen Spule, die insbesondere mit der gleichen Geschwindigkeit wie der Permanentmagnet bewegt wird, und die insbesondere an diesem angebunden ist, induziert werden. Infolgedessen ist eine Erfassung der Beschleunigung des Permanentmagneten bezüglich der Platte bzw. Scheibe ermöglicht. Die Beschleunigung wird unabhängig von der Erdbeschleunigung erfasst, weswegen die Beschleunigung unabhängig von der tatsächlichen Position des Läufers bezüglich des Stators erfasst werden kann, ohne dass diese zunächst ermittelt werden muss.

Nachfolgend wird ein Ausführungsbeispiel der Erfindung anhand einer Zeichnung näher erläutert. Darin zeigen:
- Fig. 1: schematisch in einer Draufsicht eine elektrische Maschine mit einem ersten Sensor und einem zweiten Sensor,
- Fig. 2: ein Verfahren zum Betrieb der elektrischen Maschine,
- Fig. 3: eine erste Ausführungsform einer Ermittlung einer Geschwindigkeit, und
- Fig. 4: eine zweite Variante zur Ermittlung der Geschwindigkeit.

Einander entsprechende Teile sind in allen Figuren mit den gleichen Bezugszeichen versehen.

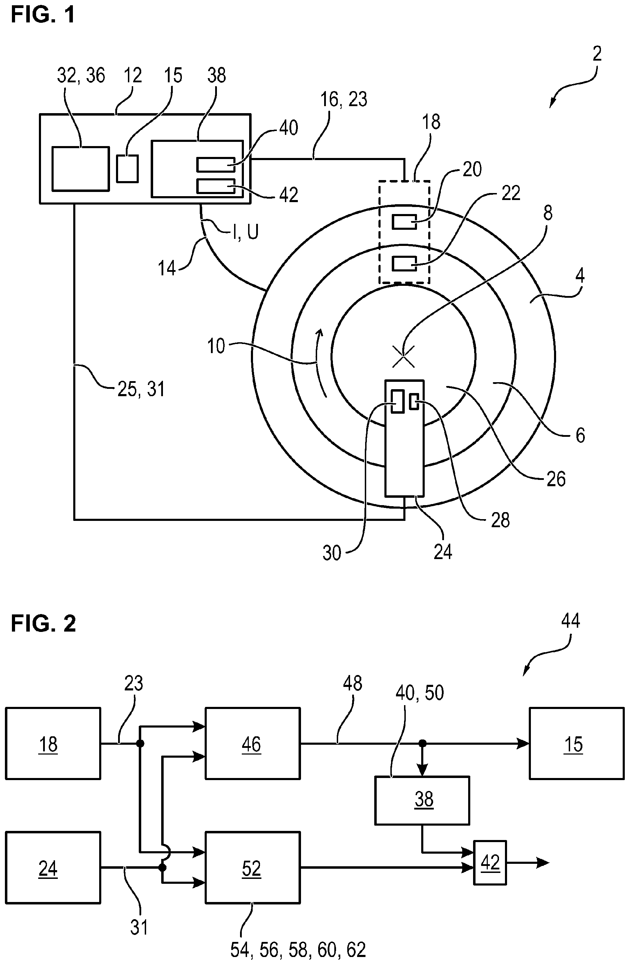

In Fig. 1 ist ein bürstenloser Elektromotor 2 mit einem Stator 4 und einem Rotor 6 dargestellt, der drehbar um eine Rotationsachse 8 innerhalb des Stators 4 gelagert ist. Bei Betrieb wird der Rotor 6 bezüglich des Stators 4 in eine Rotationsrichtung 10 bewegt. Der Elektromotor 2 umfasst ferner eine Steuereinheit 12, die mittels einer Stromleitung 14 mit Elektromagneten des Stators 4 elektrisch kontaktiert ist, die mittels in einer Dreiecks- oder Sternschaltung miteinander verschalteter elektrischer Spulen realisiert sind. Die Steuereinheit 12 selbst umfasst einen Umrichter, der eine Anzahl an in einer Brückenschaltung miteinander verschalteten Leistungshalbleiterschaltern aufweist. Mittels einer einen Pl-Regler umfassenden Geschwindigkeitsregelung 15 der Steuereinheit 12 wird eine elektrische Spannung U an den Elektromagneten des Stator 4 angelegt und ein elektrischer Stromfluss I über die Stromleitung 14 eingestellt. Die Einstellung erfolgt derart, dass die realisierte Rotationsbewegung des Rotors 6 einer vorgegebenen Rotationsbewegung entspricht.

Die Steuereinheit 12 ist ferner mittels einer ersten Datenleitung 16 mit einem ersten Sensor 18 signaltechnisch gekoppelt. Der erste Sensor 18 ist ein Inkrementalgeber und weist ein erstes Sensorelement 20 auf, das am Stator 4 befestigt ist. Ferner umfasst der erste Sensor 18 ein zweites Sensorelement 22, das an dem Rotor 6 befestigt ist und bei Betrieb, also einer Rotation des Stators 6 an dem ersten Sensorelement 20 in Rotationsrichtung 10 vorbeigeführt wird. Das erste Sensorelement 20 ist beispielsweise ein optischer Sensor, mittels dessen optische Signale erfasst werden. Das zweite Sensorelement 22 ist hierbei geeignet ausgestaltet, beispielsweise umfasst das zweite Sensorelement 22 eine Anzahl von Markierungen, wie Strichen, die um die Rotationsachse 8 verteilt an dem Rotor 6 angebracht sind. Mittels des ersten Sensors 18 wird hierbei die Position des Rotors 6 bezüglich des Stators 4 mittels der optischen Markierungen erfasst, die hierfür geeignet ausgestaltet sind. Mit anderen Worten wird bei Betrieb mittels des ersten Sensors 18 die Position des Rotors 6 bezüglich des Stators 4 erfasst, und dieser Wert wird mittels der ersten Datenleitung 16 an die Steuereinheit 12 geleitet. In einer alternativen Ausführungsform wird mittels des ersten Sensors 18 die Geschwindigkeit des Rotors 6 bezüglich des Stators 4 erfasst, also eine Änderung der Position des Rotors 6 bezüglich des Stators 4. Hierfür ist der erste Sensor 18 geeignet angepasst. Die mittels des ersten Sensors 18 erfassten Werte werden als erste Sensorsignale 23 mittels der ersten Datenleitung 16 an die Steuereinheit 12 übertragen.

Die elektrische Maschine 2 umfasst ferner einen zweiten Sensor 24, der mittels einer zweiten Datenleitung 25 mit der Steuereinheit 12 signaltechnisch gekoppelt ist. Der als Ferraris-Sensor ausgeführte zweite Sensor 24 umfasst eine Scheibe 26 aus einem Kupfer oder einem Aluminium, also aus reinem Kupfer bzw. reinem Aluminium oder einer Kupfer- bzw. Aluminiumlegierung. Die Scheibe 26 ist konzentrisch zu dem Rotor 6 bezüglich der Rotationsachse 8 angeordnet und an diesem angebunden. Folglich wird die Scheibe 26 bei Betrieb ebenfalls in Rotationsrichtung 10 um die Rotationsachse 8 bewegt. Der zweite Sensor 24 umfasst ferner einen Permanentmagneten 28 und eine elektrische Spule 30, die ortsfest an dem Stator 4 befestigt sind. Hierbei befindet sich der Permanentmagnet 28 in Rotationsrichtung 10 vor der elektrischen Spule 30. Bei einer Rotation der Scheibe 26 wird mittels des Permanentmagneten 28 in der Scheibe 26 ein Wirbelstrom induziert, was zu einer Ausbildung eines sekundären Magnetfelds aufgrund der Wirbelströme führt. Diese Wirbelströme werden mittels der elektrischen Spule 30 erfasst und somit mittels des zweiten Sensors 24 die Beschleunigung der Scheibe 26 bezüglich des Permanentmagneten 28. Folglich wird auch die Beschleunigung des Rotors 6 bezüglich des Stators 4 mittels des zweiten Sensors 24 erfasst, und dieser Wert wird als zweites Sensorsignal 31 mittels der zweiten Datenleitung 24 an die Steuereinheit 12 geleitet.

Die Steuereinheit 12 umfasst ferner einen dritten Sensor 32, mittels dessen der elektrische Stromfluss I erfasst wird, der mittels der Stromleitung 14 geführt wird. Ebenso wird mit dem dritten Sensor 32 die elektrische Spannung U erfasst, die mittels der Stromleitung 14 an dem Stator 4 angelegt wird. Innerhalb der Steuereinheit 12 ist ferner ein theoretisches Modell hinterlegt, mittels dessen bei Betrieb anhand des elektrischen Stromflusses I und der elektrischen Spannung U ein drittes Sensorsignal 36 berechnet wird, das einer theoretischen Geschwindigkeit des Rotors 8, also dessen Drehzahl entspricht, wie sich aufgrund der Bestromung mittels des Umrichters der Steuereinheit 12 ergeben sollte.

Die Steuereinheit 12 umfasst ferner eine Sicherheitsüberwachung 38 mit einer ersten sicheren Funktion 40 und einer zweiten sicheren Funktion 42. Die erste sichere Funktion 40 ist sichere begrenzte Geschwindigkeit (SLS) und die zweite sichere Funktion 42 ist sicher abgeschaltetes Moment (STO).

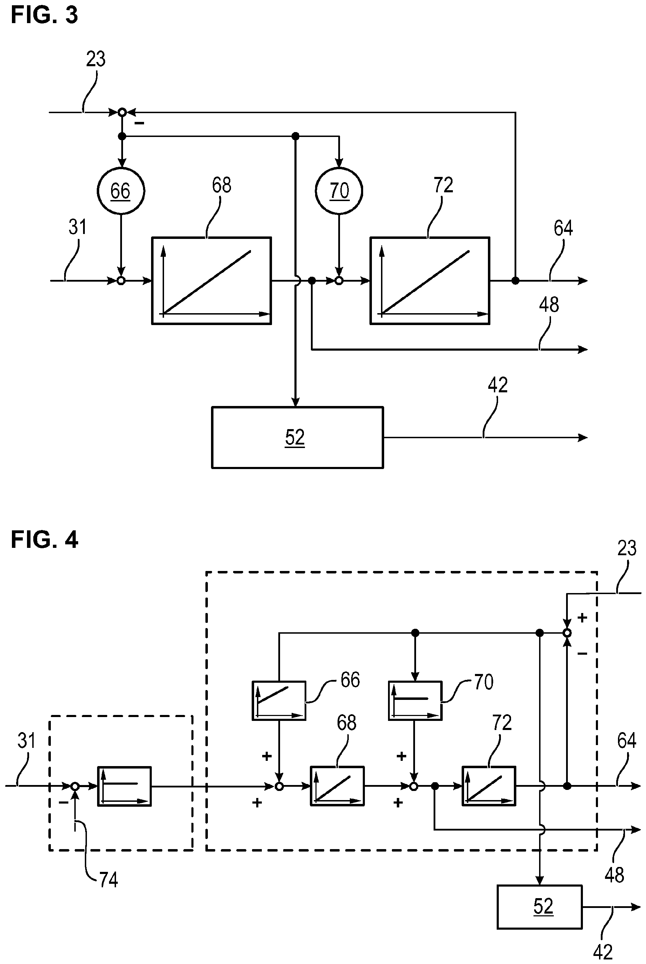

In Fig. 2 ist ein Verfahren 44 zum Betrieb des Elektromotors 2 schematisch dargestellt. Mittels des ersten Sensors 18 wird das erste Sensorsignal 23 erfasst und einem Beobachter 46 zugeleitet. Auch wird das mittels des zweiten Sensors 24 erfasste zweite Sensorsignal 31 dem Beobachter 46 zugeführt. Mittels des Beobachters 46 wird eine Geschwindigkeit 48 anhand des ersten und zweiten Sensorsignals 23, 31 berechnet (Fig. 3, Fig. 4). Der Beobachter 46 ist mehrkanalig aufgebaut. Mit anderen Worten wird die Geschwindigkeit 48 mittels sich unterscheidender Methoden oder sich unterscheidender Funktionen berechnet. Insbesondere werden einerseits ein hardware-basiertes und ein software-basiertes Modell herangezogen.

Die Geschwindigkeit 48 wird einerseits sowohl der Geschwindigkeitsregelung 15 zugeleitet, mittels derer die Bestromung des Stators 4 mittels der Stromleitung 14 verändert wird. Hierfür wird der elektrische Stromfluss I und die elektrische Spannung U derart angepasst, dass die Rotationsgeschwindigkeit des Rotors 6 einem Sollwert entspricht, was mittels erneuter Ermittlung der Geschwindigkeit 48 überwacht wird. Die Geschwindigkeit 48 wird ferner der Sicherheitsüberwachung 38 zugeleitet, mittels derer die erste sichere Funktion 40 ausgeführt wird. Hierfür wird die Geschwindigkeit 48 mit einem ersten Grenzwert 50 verglichen. Falls die ermittelte Geschwindigkeit 48 größer als der erste Grenzwert 50 ist, wird die zweite Funktion 42 ausgeführt, und folglich eine Bestromung des Stators 4 mittels der Stromleitung 12 unterbrochen. Infolgedessen trudelt der Rotor 6 momentenlos aus.

Das erste und das zweite Sensorsignal 23, 31 werden ferner einer Diagnoseeinheit 52 der Steuereinheit 12 zugeleitet. Mittels der Diagnoseeinheit 52 wird zumindest eines der beiden Sensorsignale 23, 31 derart angepasst, dass das angepasste Sensorsignal und das weitere Sensorsignal die gleiche physikalische Dimension aufweisen. Hierfür wird entweder eine zeitliche Ableitung 54 des ersten Sensorsignals 23 erstellt, wofür das erste Sensorsignal 23 zweimal zeitlich abgeleitet wird. Dieser Wert wird als Hilfswert 56 herangezogen. Mittels des Hilfswerts 56 und dem zweiten Sensorsignal 31 wird eine Abweichung 58 erstellt, in dem die gewichtete Differenz zwischen dem Hilfswert 56 und dem zweiten Sensorsignal 31 berechnet und hiervon der Betrag herangezogen wird. Hierbei wird das zweite Sensorsignal 31 mit einem Gewichtungsfaktor und der Hilfswert 56 mit einem weiteren Gewichtungsfaktor, wie 0,5, multipliziert und die derart veränderten Werte zur Differenzbildung herangezogen.

In einer weiteren Ausführungsform wird der Hilfswert 56 mittels eines zeitlichen Integrals 60 des zweiten Sensorsignals 31 erstellt. Hierfür wird das zweite Sensorsignal 31 zweifach zeitlich integriert, sodass der Hilfswert 56 die gleiche physikalische Größe beschreibt wie das erste Sensorsignal 23. Mittels des ersten Sensorsignals 23 und diesem Hilfswert 56 wird ebenfalls mittels einer gewichteten Differenz die Abweichung 58 ermittelt, indem zunächst das erste Sensorsignal 23 und der Hilfswert 56 jeweils mit einem geeigneten Gewichtungsfaktor multipliziert werden und voneinander abgezogen werden. Von dieser Differenz wird zur Erstellung der Abweichung 58 der Absolutbetrag verwendet. In einer weiteren Alternative wird das zweite Sensorsignal 31 zur Erstellung des Integrals 60 einmal zeitlich integriert und zur Erstellung der Ableitung 54 das erste Sensorsignal 23 einmal zeitlich abgeleitet. Die auf diese Weise gewonnen Werte werden jeweils mit einem Gewichtungsfaktor multipliziert und voneinander abgezogen. Als Abweichung 58 wird hierbei ebenfalls lediglich der Absolutbetrag der Differenz verwendet.

In einer weiteren Alternative wird die Abweichung 58 mittels des dritten Sensorsignals 36 und entweder das Integral 60 über das zweite Sensorsignal 31 oder aber die Ableitung 54 des ersten Sensorsignals 23 zur Erstellung einer gewichteten Differenz herangezogen. Hierbei wird jeweils das erste Sensorsignal 23 lediglich einmal abgeleitet oder das zweite Sensorsignal 31 einmal integriert. Mit anderen Worten wird das erste Sensorsignal 23 bzw. das zweite Sensorsignal 31 auf die gleiche physikalische Größe wie das dritte Sensorsignal 36 transformiert. Auch hier wird die Abweichung 58 mittels einer gewichteten Differenz und anschließender Absolutwertbildung ermittelt.

Die Abweichung 58 wird mit einem zweiten Grenzwert 62 verglichen. Falls die Abweichung 58 größer als der zweite Grenzwert 62 ist, wird die die zweite Funktion 42 ausgeführt und folglich der Rotor 6 stromlos geschaltet. Folglich trudelt der Rotor 6 um die Rotationsachse 8 momentenlos aus.

In Fig. 3 ist schematisch vereinfacht die Ermittlung der Geschwindigkeit 48 dargestellt. Von dem ersten Sensorsignal 23 wird eine Position 64 abgezogen und zweimal zeitlich abgeleitet. Diese Differenz wird mit einem ersten Koeffizienten 66 multipliziert. Hierzu wird das zweite Sensorsignal 31 addiert und dieser Wert mittels einer ersten Integralfunktion 68 zeitlich integriert. Dieser Wert wird als Geschwindigkeit 48 herangezogen. Zur Geschwindigkeit 48 wird ferner eine erste zeitliche Ableitung des ersten Sensorsignals 23, die mit einem zweiten Koeffizienten 70 multipliziert ist, addiert und einer zweiten Integralfunktion 72 zugeleitet. Mittels der zweiten Integralfunktion 72 wird der zugeführte Wert einfach zeitlich integriert. Das Ergebnis der zweiten Integralfunktion 72 wird als Position 64 herangezogen. Ferner wird die Differenz zwischen der Position 64 und dem ersten Sensorsignal 23 der Diagnoseeinheit 52 zugeleitet, und, falls diese Differenz grösser als ein geeigneter Grenzwert ist, die zweite sichere Funktion 42 ausgeführt.

In Fig. 4 ist in einer weiteren Alternative die Ermittlung der Geschwindigkeit 48 dargestellt. Die Erstellung der Position 64 sowie die zeitliche Integration und Multiplikation mit dem ersten bzw. zweiten Koeffizienten 66, 70 als auch die Differenzbildung zwischen der Position 64 und dem ersten Sensorsignal 23 entspricht der in Fig. 3 gezeigten Variante. Auch ist die erste Integralfunktion 68 und die zweite Integralfunktion 72 sowie die Zuleitung der Differenz zwischen dem ersten Sensorsignal 23 und der Position 64 zur Diagnoseeinheit 52 gleich. Lediglich die Bearbeitung des zweiten Sensorsignals 31 ist abgewandelt. Zu dem zweiten Sensorsignal 31 wird nämlich ein zeitlich veränderlicher Offset 74 addiert. Hierfür wird zunächst ein zeitlicher Mittelwert des zweiten Sensorsignals 31 gebildet. Auch wird das erste Sensorsignal 23 (Messsignal) zweimal zeitlich abgeleitet und hieraus ebenfalls der zeitliche Mittelwert gebildet. Die zum jeweiligen Mittelwert herangezogenen zeitlichen Fenster, über die der Mittelwert erstellt wird, sind gleich. Der anhand des ersten Sensorsignals 23 gebildete Mittelwert und der anhand des zweiten Sensorsignals 31 gebildete Mittelwert werden verglichen und hieraus die Differenz gebildet. Die Differenz wird als Offset 74 herangezogen. Bei einer erneuten Mittelwertbildung des mittels des Offsets 74 korrigierten zweiten Sensorsignals 31 würden sich folglich die beiden Mittelwerte entsprechen. Auf diese Weise wird eine zeitliche Drift des zweiten Sensors 24 beispielsweise aufgrund von Sättigungseffekten ausgeglichen.

### Bezugszeichenliste

- 2: Elektromotor
- 4: Stator
- 6: Rotor
- 8: Rotationsachse
- 10: Rotationsrichtung
- 12: Steuereinheit
- 14: Stromleitung
- 15: Geschwindigkeitsregelung
- 16: erste Datenleitung
- 18: erster Sensor
- 20: erstes Sensorelement
- 22: zweites Sensorelement
- 23: erstes Sensorsignal
- 24: zweiter Sensor
- 25: zweite Datenleitung
- 26: Scheibe
- 28: Permanentmagnet
- 30: elektrische Spule
- 31: zweites Sensorsignal
- 32: dritter Sensor
- 36: drittes Sensorsignal
- 38: Sicherheitsüberwachung
- 40: erste sichere Funktion
- 42: zweite sichere Funktion
- 44: Verfahren
- 46: Beobachter
- 48: Geschwindigkeit
- 50: erster Grenzwert
- 52: Diagnoseeinheit
- 54: Ableitung
- 56: Hilfswert
- 58: Abweichung
- 60: Integral
- 62: zweiter Grenzwert
- 64: Position
- 66: erster Koeffizient
- 68: erste Integralfunktion
- 70: zweiter Koeffizient
- 72: zweite Integralfunktion
- 74: Offset

- I: elektrischer Stromfluss
- U: elektrische Spannung

## Patentansprüche

1. Verfahren (44) zum Betrieb einer elektrischen Maschine (2), insbesondere Elektromotor, die einen Stator (4) und einen Läufer (6) aufweist, und die einen ersten Sensor (18) zur Erfassung einer Position des Läufers (6) bezüglich des Stators (4) oder zur Erfassung einer Änderung einer Position des Läufers (6) bezüglich des Stators (4) und einen zweiten Sensor (24) zur Erfassung einer Beschleunigung des Läufers (6) bezüglich des Stators (4) umfasst, bei dem
- ein erstes Sensorsignal (23) mittels des ersten Sensors (18) erfasst wird,
- ein zweites Sensorsignal (31) mittels des zweiten Sensors (24) erfasst wird,
**dadurch gekennzeichnet, dass**
- anhand des ersten und zweiten Sensorsignals (23, 31) eine Geschwindigkeit (48) bestimmt wird, und
- die Geschwindigkeit (48) sowohl einer Geschwindigkeitsregelung (15) als auch einer Sicherheitsüberwachung (38) zur Ausführung einer ersten sicheren Funktion (40) zugeleitet wird.

2. Verfahren (44) nach Anspruch 1, bei dem mittels der Sicherheitsüberwachung (38) die Geschwindigkeit (48) mit einem ersten Grenzwert (50) verglichen wird.

3. Verfahren (44) nach Anspruch 1 oder 2, bei dem anhand eines der Sensorsignale (23, 31) eine Abweichung (58) erstellt und eine zweite sichere Funktion (42) ausgeführt wird, falls die Abweichung (58) größer als ein zweiter Grenzwert (62) ist.

4. Verfahren (44) nach Anspruch 3, bei dem ein zeitliches Integral (60) über das zweite Sensorsignal (31) erstellt und die Abweichung (58) zwischen dem Integral (60) und dem ersten Sensorsignal (23) ermittelt wird.

5. Verfahren (44) nach Anspruch 3, bei dem eine zeitliche Ableitung (54) des ersten Sensorsignals (23) erstellt und die Abweichung (58) zwischen der Ableitung (54) und dem zweiten Sensorsignal (31) ermittelt wird.

6. Verfahren (44) nach Anspruch 3, bei dem ein elektrischer Stromfluss (I) und/oder eine elektrische Spannung (U) erfasst und hieraus ein drittes Sensorsignal (36) ermittelt wird, wobei die Abweichung (58) anhand des dritten Sensorsignals (36) ermittelt wird.

7. Verfahren (44) nach einem der Ansprüche 1 bis 6, bei dem als Abweichung (58) eine gewichtete Differenz herangezogen wird.

8. Verfahren (44) nach einem der Ansprüche 1 bis 7, bei dem das zweite Sensorsignal (31) um einen, insbesondere zeitlich abhängigen, Offset (74) korrigiert wird.

9. Verfahren (44) nach einem der Ansprüche 1 bis 8, bei dem die Geschwindigkeit (48) mehrkanalig bestimmt wird.

10. Elektrische Maschine (2), insbesondere Elektromotor, die einen Stator (4) und einen Läufer (6) sowie einen ersten Sensor (18) zur Erfassung einer Position oder einer Änderung einer Position des Läufers (6) bezüglich des Stators (4) und einen zweiten Sensor (24) zur Erfassung einer Beschleunigung des Läufers (6) bezüglich des Stators (4) als auch eine Sicherheitsüberwachung (38) und eine Geschwindigkeitsregelung (15) aufweist, und die gemäß einem Verfahren (44) nach einem der Ansprüche 1 bis 9 betrieben ist.

11. Elektrische Maschine (2) nach Anspruch 10,
**dadurch gekennzeichnet,**
**dass** das Messprinzip des ersten Sensors (18) unterschiedlich von dem Messprinzip des zweiten Sensors (24) ist, und/oder dass der zweite Sensor (24) ein Ferraris-Sensor ist.

## Claims

1. Method (44) for operating an electrical machine (2), in particular an electric motor, which has a stator (4) and a rotor (6) and which comprises a first sensor (18) for detecting a position of the rotor (6) with respect to the stator (4) or for detecting a change in a position of the rotor (6) with respect to the stator (4) and a second sensor (24) for detecting an acceleration of the rotor (6) with respect to the stator (4), in which method
- a first sensor signal (23) is detected by means of the first sensor (18),
- a second sensor signal (31) is detected by means of the second sensor (24),
**characterized in that**
- a speed (48) is determined on the basis of the first and the second sensor signal (23, 31), and
- the speed (48) is forwarded both to a speed control arrangement (15) and also to a safety monitoring arrangement (38) for executing a first safe function (40).

2. Method (44) according to Claim 1, in which the speed (48) is compared with a first limit value (50) by means of the safety monitoring arrangement (38).

3. Method (44) according to Claim 1 or 2, in which a deviation (58) is created on the basis of one of the sensor signals (23, 31) and a second safe function (42) is executed if the deviation (58) is greater than a second limit value (62).

4. Method (44) according to Claim 3, in which a time integral (60) over the second sensor signal (31) is created and the deviation (58) between the integral (60) and the first sensor signal (23) is ascertained.

5. Method (44) according to Claim 3, in which a time derivative (54) of the first sensor signal (23) is created and the deviation (58) between the derivative (54) and the second sensor signal (31) is ascertained.

6. Method (44) according to Claim 3, in which an electric current flow (I) and/or an electric voltage (U) is detected and a third sensor signal (36) is ascertained therefrom, wherein the deviation (58) is ascertained on the basis of the third sensor signal (36) .

7. Method (44) according to one of Claims 1 to 6, in which a weighted difference is used as the deviation (58) .

8. Method (44) according to one of Claims 1 to 7, in which the second sensor signal (31) is corrected by an, in particular time-dependent, offset (74).

9. Method (44) according to one of Claims 1 to 8, in which the speed (48) is determined in a multichannel manner.

10. Electrical machine (2), in particular electric motor, which has a stator (4) and a rotor (6) and a first sensor (18) for detecting a position or a change in a position of the rotor (6) with respect to the stator (4) and a second sensor (24) for detecting an acceleration of the rotor (6) with respect to the stator (4) and also a safety monitoring arrangement (38) and a speed control arrangement (15), and which is operated in line with a method (44) according to one of Claims 1 to 9.

11. Electrical machine (2) according to Claim 10, **characterized in that** the measurement principle of the first sensor (18) is different from the measurement principle of the second sensor (24), and/or **in that** the second sensor (24) is a Ferraris sensor.

## Revendications

1. Procédé (44) de fonctionnement d'une machine électrique (2), en particulier d'un électromoteur, laquelle comporte un stator (4) et un rotor (6), et laquelle comprend un premier capteur (18) pour saisir une position du rotor (6) par rapport au stator (4) ou pour saisir une variation d'une position du rotor (6) par rapport au stator (4) et un deuxième capteur (24) pour saisir une accélération du rotor (6) par rapport au stator (4), lors duquel
- un premier signal de capteur (23) est saisi au moyen du premier capteur (18),
- un deuxième signal de capteur (31) est saisi au moyen du deuxième capteur (24),
**caractérisé en ce que**
- une vitesse (48) est déterminée à l'aide des premiers et deuxièmes signaux de capteur (23, 31), et
- la vitesse (48) est fournie à un régulateur de vitesse (15) ainsi qu'à une surveillance de sécurité (38) afin de mettre en oeuvre une première fonction fiable (40).

2. Procédé (44) selon la revendication 1, lors duquel la vitesse (48) est comparée à une première valeur limite (50) au moyen de la surveillance de sécurité (38) .

3. Procédé (44) selon la revendication 1 ou 2, lors duquel une déviation (58) est établie à l'aide d'un des signaux de capteur (23, 31) et une deuxième fonction fiable (42) est mise en oeuvre, dans le cas où la déviation (58) est supérieure à une deuxième valeur limite (62).

4. Procédé (44) selon la revendication 3, lors duquel une intégrale temporelle (60) sur le deuxième signal de capteur (31) est établie et la déviation (58) entre l'intégrale (60) et le premier signal de capteur (23) est calculée.

5. Procédé (44) selon la revendication 3, lors duquel une dérivée temporelle (54) du premier signal de capteur (23) est établie et la déviation (58) entre la dérivée (54) et le deuxième signal de capteur (31) est calculée.

6. Procédé (44) selon la revendication 3, lors duquel une intensité de courant électrique (I) et/ou une tension électrique (U) est saisie et à partir de quoi un troisième signal de capteur (36) est calculé, dans lequel la déviation (58) est calculée à l'aide du troisième signal de capteur (36).

7. Procédé (44) selon l'une des revendications 1 à 6, lors duquel une différence pondérée est utilisée comme déviation (58) .

8. Procédé (44) selon l'une des revendications 1 à 7, lors duquel le deuxième signal de capteur (31) est corrigé avec un décalage (74), qui est en particulier fonction du temps.

9. Procédé (44) selon l'une des revendications 1 à 8, lors duquel la vitesse (48) est déterminée en multivoie.

10. Machine électrique (2), en particulier électromoteur, laquelle comporte un stator (4) et un rotor (6) ainsi qu'un premier capteur (18) pour saisir une position ou une variation d'une position du rotor (6) par rapport au stator (4) et un deuxième capteur (24) pour saisir une accélération du rotor (6) par rapport au stator (4), ainsi qu'une surveillance de sécurité (38) et un régulateur de vitesse (15), et fonctionnant d'après un procédé (44) selon l'une des revendications 1 à 9.

11. Machine électrique (2) selon la revendication 10, **caractérisée en ce que** le principe de mesure du premier capteur (18) est différent du principe de mesure du deuxième capteur (24), et/ou **en ce que** le deuxième capteur (24) est un accéléromètre de Ferraris.
